## Europäisches Patentamt

**European Patent Office**

**Office européen des brevets**

(19)

(11) Publication number: **0 125 047**
**B1**

(12) **EUROPEAN PATENT SPECIFICATION**

(45) Date of publication of patent specification: **15.06.88**

(21) Application number: **84302490.2**

(22) Date of filing: **11.04.84**

(51) Int. Cl.⁴: **B 60 C 3/00, B 60 C 15/02,**
**B 60 B 25/04, B 60 B 25/22**

(54) Automotive vehicle tire and mounting system therefor.

(30) Priority: **12.04.83 US 484130**

(43) Date of publication of application:
**14.11.84 Bulletin 84/46**

(45) Publication of the grant of the patent:
**15.06.88 Bulletin 88/24**

(84) Designated Contracting States:
**AT BE CH DE FR GB IT LI LU NL SE**

(56) References cited:
**EP-A-0 063 732**
**CH-A- 618 644**
**DE-A-2 829 452**
**DE-A-3 206 171**
**FR-A-1 592 415**
**FR-A-2 337 058**
**FR-A-2 337 059**
**FR-A-2 506 683**
**GB-A-1 459 998**
**US-A-3 425 475**
**US-A-3 938 573**

(73) Proprietor: **The Uniroyal Goodrich Tire Company**
**600 South Main Street**
**Akron Ohio 44397-0001 (US)**

(72) Inventor: **Augier, Pierre J.**
**1212 Bishop Road Grosse Pointe Park**
**Wayne Michigan 48230 (US)**

(74) Representative: **Geldard, David Guthrie et al**
**URQUHART-DYKES AND LORD 5th Floor, Tower House Merrion Way**
**Leeds, LS2 8PB West Yorkshire (GB)**

Courier Press, Leamington Spa, England.

## Description

This invention relates to an automotive vehicle tire and a mounting system therefor, the design and construction of which cooperate to provide a optimized set of structural and operational characteristics.

Automotive vehicles, especially automobiles and trucks, which are adapted to be driven (or, in the case of trailers, to be towed) at relatively high speeds over streets and highways, ride on pneumatic tires mounted on metal wheels, each such wheel having an annular body portion and a transverse rim portion welded to the outer periphery of the body portion, the rim portion terminating at its opposite lateral boundaries in a pair of generally upstanding rim flanges and defining intermediate the flanges directly adjacent thereto a pair of bead seats on which the beads of the associated mounted tire are located. In practice, the rim portions of the wheels for passenger cars and light trucks are usually of the "drop center" variety, i.e. each wheel rim is a one-piece structure and is formed with a circumferential deep well intermediate the rim flanges. Such a deep well is provided to enable the circumferentially essentially inextensible but radially somewhat deformable beads of a tire to be slipped one after the other in well-known fashion over one of the rim flanges and onto the wheel rim. As is well known, of course, once the two beads of a tire are located between the rim flanges of a wheel, the tire is inflated to a pressure sufficiently high to cause the beads to be shifted laterally (i.e. axially) outwardly of the rim onto the bead seats and up against the rim flanges.

A tire and wheel combination of this type is subject to a number of drawbacks and disadvantages, however, both in terms of problems that arise from the mounting of the tire on the wheel and in terms of problems that arise from the structural and operational characteristics of the tire per se, the wheel per se, and the assembled tire/wheel combination. Some of these, without intending them to be an exhaustive cataloguing, may be briefly described as follows.

### 1. Mounting problems

Since wheel rim flanges, being intended to laterally confine and retain the tire beads on the rim, extend essentially radially outwardly from the base of the rim, i.e. at an angle of usually at least about 45° to the base and frequently almost perpendicularly to the same, the outermost diameters of the rim flanges are of necessity considerably larger than the rim diameter, i.e. the diameter of the rim in the region of the bead seats. Thus, with the inner diameter of the beads of the tire being substantially equal to the rim diameter, a portion of one bead has to be first forced over one of the rim flanges and dropped into the well, after which a lever-like tool is run around the wheel between the bead and the rim flange to force the remainder of that bead over the rim flange and onto the rim. The same procedure must then be repeated with the second bead of the tire. The operation of so forcing a tire bead over a wheel rim flange can, however, damage the rubber covering of the bead, thereby creating a situation where not only could air ultimately leak out of the tire via the bead/rim interface but dirt and moisture could got in under the bead and the deterioration of the rubber could even be propagated from the damaged portion of the bead to other parts of the tire. Again, once a tire has been so passed onto a wheel rim, it must then, as previously mentioned, be inflated to a pressure sufficiently high to displace or "pop" the beads onto their respective bead seats. This, however, gives rise to the possibility that the tire will be mismounted, i.e. will be mounted with an improper bead seating or with the beads not in full engagement with the rim flanges, which could be due to defects in the rim construction as well as to dimensional differences between the tire heads on the one hand and the rim on the other (it is a well-known fact that standardized metallic vehicle wheels, as manufactured, include appreciable dimensional tolerances). Generally, also, the mounting of the tire on the wheel requires the prior application of a lubricant to either the beads of the tire or the bead seats on the wheel rim to facilitate the shifting of the beads onto the bead seats, which is an extra operation to begin with and a messy one at that and does not necessarily ensure the proper seating of the beads. The presence of the deep well in the wheel rim, of course, also materially reduces the degree of clearance between the rim as a whole and the wheel axle, thereby reducing the amount of space available for location of the vehicle brake for that wheel.

### II. Structural/operational problems

Whenever a vehicle is in motion, the tires on which it is riding are subject to a number of severe stresses. In a conventional tire/wheel combination, however, the tire is a separate entity from and is not adhered to the metal wheel rim. Of necessity, therefore, when the tire is placed under torque due to braking or acceleration of the vehicle, there will be, especially in the case of a tubeless tire, a tendency for some circumferential slippage of the tire relative to the bead seats, and hence for some degree of wear at the beads. The same lack of adhesion between the beads and the wheel rim, of course, also permits the beads to rock radially or transversely away from the rim flanges as the sidewalls are flexed while the tire is rolling over the ground, especially during cornering or when hitting a curb during a parallel parking maneuver. As each sidewall is flexed, moreover, a substantial amount of rubbing or chafing of the sidewall occurs where the portion of the sidewall just radially outwardly of the bead comes into repeated and intermittent contact with the radially outwardmost boundary region of the rim flange. Thus, perhaps because of manufacturing tolerances but perhaps also because the tire is constantly subjected to circumferential bead

slippage, radial bead rocking, and bead chafing, small air leaks tend to develop at the bead/rim interfaces. Concomitantly, another possibility of an air leak developing exists at the location of the valve hole normally provided in the vehicle wheel rim to accommodate the separately inserted tire inflation valve. Should enough air escape from the tire through such air leaks, however, it may become possible for at least one of the beads effectively to roll laterally inwardly off its respective bead seat, thereby possibly causing a loss of control of the vehicle by the driver while the vehicle is in high speed motion.

Still further, in order to render the beads essentially resistant to circumferential extension as far as possible, each bead is of necessity reinforced by a heavy bead wire arrangement, generally in the form of a strand of one or more relatively thick wires or ribbons wound for a multiplicity of turns into a bulky and circumferentially substantially inextensible albeit radially deformable bead wire core bundle. The cost of manufacturing such bead wire cores and preparing them for incorporation in the tire is, of course, a significant element of the overall cost of manufacturing the tire. Moreover, the bulk of these bead wire cores makes it necessary that the radially inward regions of the sidewalls contiguous to the beads be made correspondingly thick through the addition of extra amuonts of rubber. The weight of the added rubber, however, constitutes a substantial part of the weight of each tire and hence of the overall weight of the vehicle (and the vehicle weight is even higher whenever a fifth or spare tire is being carried in the vehicle), and obviously the power which must be expended in driving the vehicle corresponds directly to the weight of the vehicle. Finally, it is well known that if, while the vehicle is in high speed motion, the pressure in a tire becomes too low, whether by a process of slow leakage or through a more or less catastrophic deflation (such as in case of a blowout), so that the beads become able to move away from their associated rim flanges and laterally inwardly of the rim, the beads can actually come into the region of the well portion of the rim, drop into the well and then pass off the rim to effectively demount the tire from the wheel in a rapid· sequence of stages that is essentially the reverse of the herein previously described sequence followed during the mounting of the tire on the wheel. Thus, not only does a conventional tire/ wheel combination not provide any substantial "run flat" capability at high speeds, but the aforesaid ability of the deflated tire to be stripped off the wheel rim while the vehicle is moving at a high speed can bring about disastrous consequences to the occupants of the disabled vehicle as well as to innocent passers by.

As is also well known, problems in the performance of a tire (e.g. in its ride and cornering properties) may arise due to the structural characteristics of the tire. Thus, on the one hand in conventional tires it is frequently the practice to extend one or more of the fabric carcass plies around the bead reinforcement and well up into the proximate sidewall, the theory being that this will provide an extra layer of fabric reinforcement in the region of the sidewall where bead chafing is most likely to occur. However, the cut end of each such turn-up ply then constitutes a mechanical discontinuity in the sidewall which, as the sidewall is repeatedly flexed, may become separated from the overlying sidewall rubber and thereby weaken the tire sufficiently to render it unfit for use. On the other hand, the almost worldwide trend in tire manufacture currently is toward tires with ever lower aspect ratios. The "aspect ratio" of a tire, by definition, is the ratio of the section height of the tire to the width of the section at its widest portion, with the section height being the perpendicular distance between two lines parallel to the tire axis, one located at the toe ring diameter and one tangent to the outer surface of the tread at the apex thereof, i.e. where it is intersected by the mid-circumferential plane of the tire. A low aspect ratio tire, however, while generally characterized by good handling (cornering) and rolling resistance properties, also tends to give a rough ride and to be subject to certain sidewall problems.

It should be noted at this point that some attempts have been made by others in the art to overcome some of the herein outlined disadvantages of conventional tires and tire/wheel combinations.

For example, wheels with semi-drop center rims (rims having only a shallow medial well formed therein) and flat base rims (rims having no well at all formed therein) have long been known for use especially with heavy trucks and other heavy-duty vehicles to facilitate the mounting and demounting of the usually large tires of such vehicles. A rim of such a wheel generally has one fixed and one demountable flange, with the demountable flange fitting into a gutter on the outboard edge of the rim to hold the tire in place.

Wheels with divided rims for both large and small vehicles, especially military vehicles, are also known. A divided wheel rim consists of two sections of either equal or unequal width, one of which carries a plurality of circumferentially distributed, axially extending studs or bolts while the other section is provided with a corresponding number of holes, so that the two sections can be bolted together with the aid of nuts in the same manner that a wheel is secured to a vehicle axle hub. The use of a divided rim of either of these types, however, entails the use of a special beadlock, of either the continuous channel type or the hinged segmental type, to hold a tire in position on the rim.

Again, in order to avoid the problems of circumferential bead slippage and radial bead rocking and roll-off, and in order to concomitantly provide some degree of run-flat capability, the cementing of the beads of a conventional tire directly to a wheel rim has been suggested, as shown, for example, by U.S. Patent No. 3,938,573. This document discloses a tubeless pneumatic tire having a generally toroidal shape defining a circumferential crown region, a tread overlying the crown region, and a pair of sidewalls extending generally radially inwardly from the tread and terminating in a pair of circumferential interiorly reinforced beads and two ring members constituting parts of a mounting system for the tire and each defining a respective bead seat, an associated bead restraining flange and an associated sidewall-supporting extension from the bead restraining flange, the ring members being adhered to the tire at the inboard and outboard sides of the tire, respectively, the zone of adhesion in each case extending over the surface of the foot of the respective bead.

The document further discloses a tire mounting system for use with a tubeless pneumatic tire, the mounting system including a drum having a drum-body adapted to be secured to the hub of a vehicle axle and a peripheral skirt secured to said drum-body and extending therefrom in the inboard direction of the vehicle when the drum is properly mounted on the hub of the vehicle axle, said system further including two ring members each defining a respective bead seat, an associated bead restraining flange and an associated sidewall-supporting extension of the latter, said ring members being adapted to be adhered to the tire at the inboard and outboard sides of the tire respectively, the zone of adhesion in each case extending over the surface of the foot of the respective bead, said outboard ring member being contoured to dispose the outboard bead seat, bead restraining flange and sidewall-supporting extension defined by said outboard ring member at locations relative to the axis of the tire corresponding to the locations of the inboard bead seat, bead restraining flange and sidewall-supporting extension defined by said inboard ring member.

However, this structure does not overcome the aforesaid mounting problems, nor does it deal effectively with the problems of bead rocking and sidewall or bead chafing. The invention seeks to mitigate such problems. According to a first aspect of the invention, in a tire as aforesaid, said zone of adhesion further extends over the axially outer side of the respective bead and thence over the surface of the portion of the associated sidewall located just radially outwardly of and contiguous to the bead, and each of said ring members is constructed and arranged for releasable attachment thereof to a vehicle axle-borne drum constituting another part of the mounting system for the tire.

According to a second aspect of the invention, in a tire mounting system as aforesaid, said skirt is provided at its inboard lateral boundary with a circumferential flange section and is devoid of any flange section at its outboard lateral boundary, said inboard ring member has contours corresponding substantially to those of said flange section of said skirt, and there is provided first attachment means for releasably securing the inboard ring member to said skirt along said flange section and second attachment means for releasably securing the outboard ring member to said drum body adjacent the outboard lateral boundary of said skirt. Thus, associated with the tire are two separate ring members which constitute parts of the mounting system for the tire and define the requisite bead seats and a pair of bead restraining flanges, the latter preferably being of lower than conventional height and having respective shallow, low-angle extensions matched to the aforesaid low-angle sidewall portions. The ring members, over substantially the full extent of the bead seats, the bead restraining flanges and the low-angle extensions, are permanently adhered to the tire, e.g. by being bonded or vulcanized thereto, in the respective regions of the beads and the said radially inwardmost regions of the sidewalls contiguous to the beads. The ring members are further adapted to be mechanically releasably secured, as by means of bolts, lugs, or the like, to the vehicle axle-borne drum adjacent the opposite, i.e. the inboard and outboard, lateral boundaries of a peripheral skirt portion of the drum.

Through the mounting system as aforesaid, mounting and demounting of the tire is greatly simplified. Thus, by virtue of the absence of an outboard flange on the drum per se and the tapering of the flat skirt portion thereof, the tire bead carrying the inboard ring member can be easily and without any forced deformation slipped onto the drum from the outboard side of the latter until the said ring member is seated on the existing flange portion of the drum skirt at the opposite, inboard side of the drum. This allows use of a reinforcement that can be made much thinner and lighter then conventional multiple-turn multiple-wire bead core bundles.

The tire/drum combination is desirably made airtight through the application of a suitable sealant to the drum in the regions of the inner junctures between the skirt portion thereof and the two ring members. As presently contemplated, the sealant preferably is a material of any of the types disclosed in U.S. Patents Nos. 3981342, 4012567, and 4064922 and to the extent necessary the disclosures of those patents are hereby incorporated herein, but it will be apparent that possibly other types of sealing materials having acceptable physical properties may also be used.

The invention will be more fully understood from the following detailed description of a specific tire and mounting system in accordance therewith, when read in conjunction with the accompanying drawings, in which:

Fig. 1 is a fragmentary, partly elevational, transverse or axial section through a tire/drum combination according to the present invention;

Fig. 2 is a view similar to Fig. 1 but illustrates the tire with its two adhered ring members in the process of being mounted on the drum;

Fig. 3 is a greatly enlarged, fragmentary, sectional view of the inboard bead and lower sidewall region and the thereto adhered ring member of the tire shown in Figs. 1 and 2, the illustrates certain additional constructional details thereof;

Fig. 4 is an elevational view of the pneumatic tire and its adhered outboard ring member as seen from the outboard side thereof and shows the elements which constitute a part of the attachment system for this ring member and the drum;

Fig. 5 is an elevational view of the tire/drum combination as mounted on a vehicle axle, the view being taken from the outboard ring member attachment system;

Figs. 6 and 7 are enlarged, fragmentary, elevational views of the tire/drum combination as seen from the outboard side thereof and illustrate the manner in which the attachment of the outboard ring member to the drum is effected und also show the location of the novel valving system of the present invention;

Figs. 8 and 9 are enlarged, fragmentary, perspective views of the attachment system for the inboard ring member and the flanged portion of the drum skirt in two different sequential positions during the mounting of the tire on the drum;

Fig. 10 is a fragmentary sectional view similar to Fig. 1 but with the section taken on a different line and illustrates the tire valving system according to the present invention; and

Figs. 11 and 12 are fragmentary sectional views of the valving system shown in Fig. 10 and illustrate the manner of use thereof.

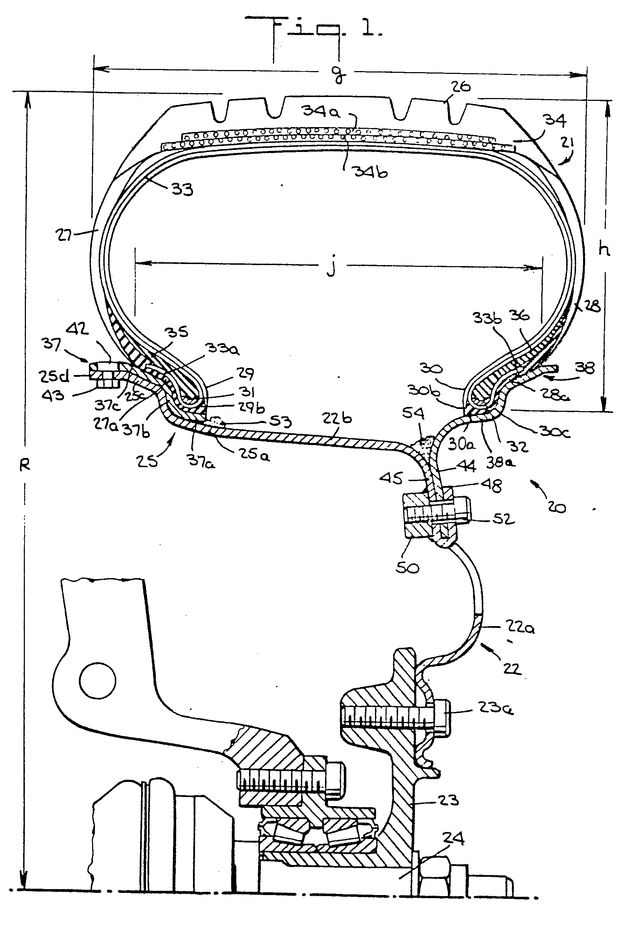

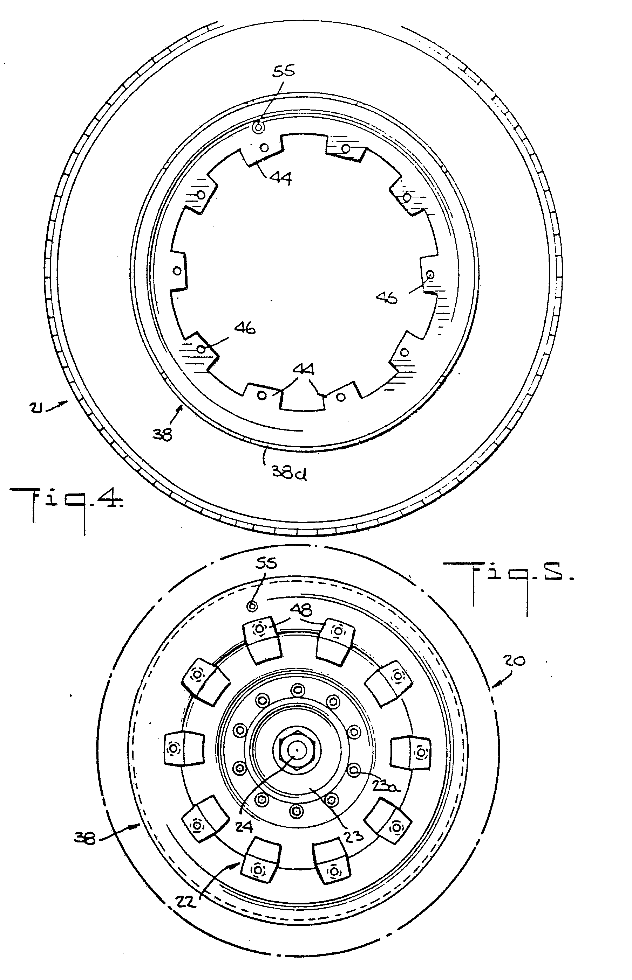

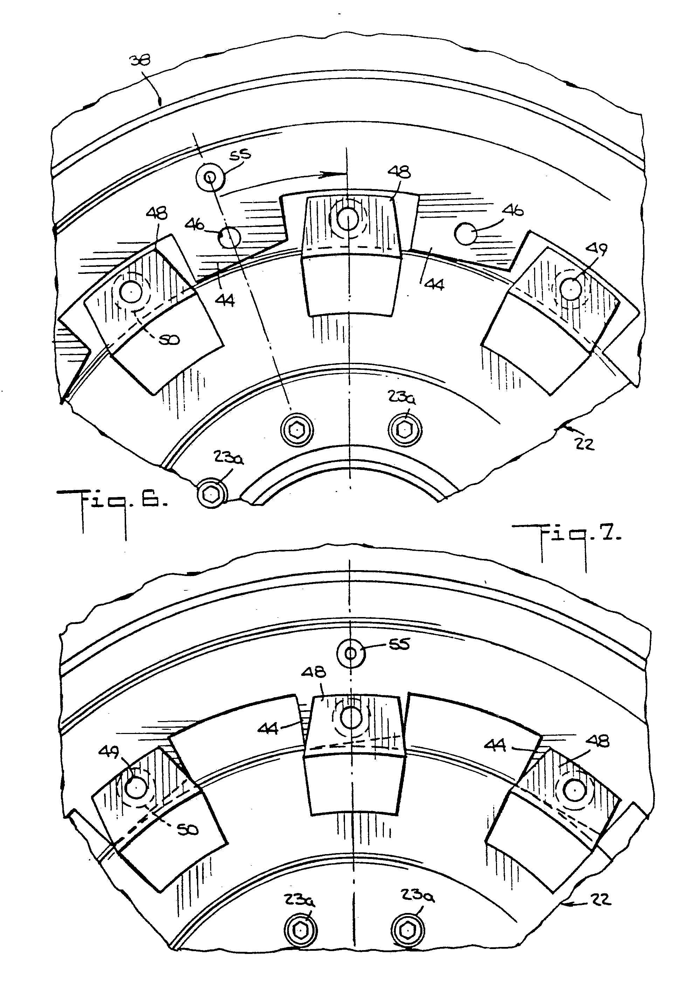

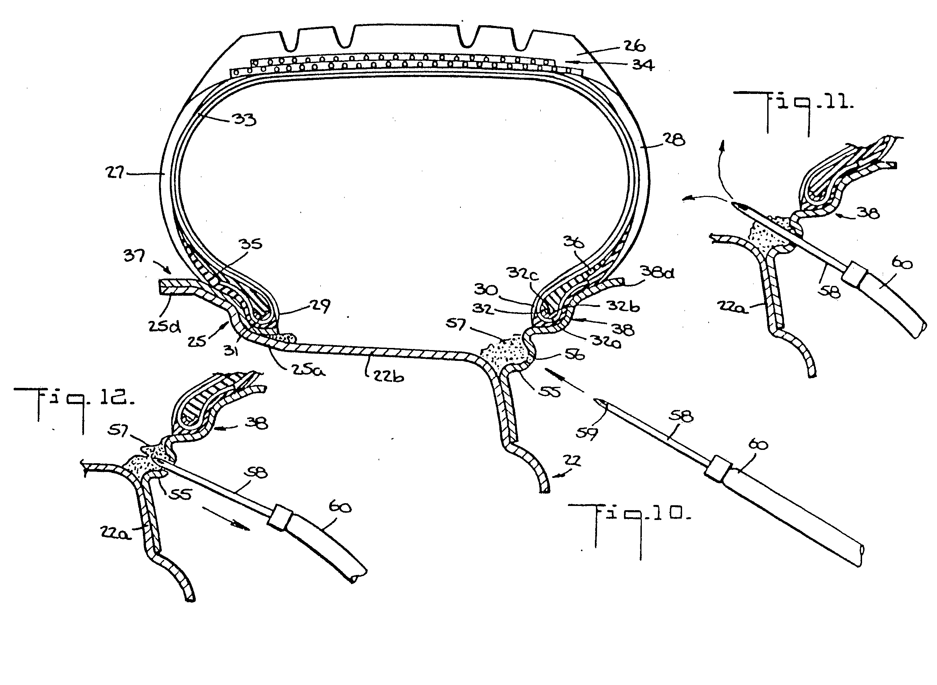

Referring now to the drawings in greater detail, in Fig. 1 there is shown a tire and mounting drum combination 20 including a pneumatic tire 21 and a drum 22 on which the tire is mounted in a manner to be more fully described hereinafter. The drum 22, which has a body portion 22a and a transverse peripheral skirt portion 22b, is secured at its mid-region to the hub 23 of a vehicle axle 24 by means of suitable bolts or screws 23a having specially configured heads, for example heads which are provided, as schematically indicated in Figs. 6 and 7, with internal hexagonal sockets (or any other type of special tool-engaging portions) designed to inhibit removal of the drum from the axle without the use of special tools. The drum skirt 22b is provided at its free end with a circumferential flange section 25. No corresponding flange section is provided at the other side of the drum.

By virtue of its form, it will be understood, the drum 22 is unidirectional, i.e. when property mounted on a vehicle axle it will always have its flanged side directed inboard of the vehicle (to the left in Fig. 1) and its flangeless side directed outboard of the vehicle (to the right in Fig. 1), and correspondingly, for reasons which will become clear presently, the tire 21 will always have to be mounted on the drum with a given one of its sides directed inboard and the other side directed outboard of the vehicle, so that, by design, mismounting of the tire is rendered effectively impossible. Portions of the drum 23 and the tire 21 are therefore, on occasion designated herein as being either "inboard" or "outboard" portions.

The tire 21 has a generally toroidal shape and includes a tread 26 overlying the circumferential crown region of the tire, and a pair of sidewalls 27 and 28 extending generally radially inwardly from the tread and terminating in a pair of beads 29 and 30 reinforced interiorly by a pair of metal members 31 and 32. The body of the tire is reinforced by a carcass ply 33 of tire cords running from one bead to the other and anchored to the bead reinforcements 31 and 32, and a tread-reinforcing belt 34 of tire cords is interposed between the tread and the underlying portion of the carcass ply over the entire circumferential crown region of the tire. The anchoring of the carcass cords to the bead reinforcements is effected by turning the end regions 33a and 33b of the ply 33 up around the metal members 31 and 32 from the inside of the tire to the outside, and respective apex or filler strips 35 and 36 are fitted into the spaces above the metal members and between the main and turned-up portions of the carcass ply. Carcass ply turn-ups, bead wire reinforcements and apex strips are, of course, per se common elements of pneumatic tires, but as will be more fully explained presently the forms and arrangements of these elements in the tire 21 differ materially from those of their known antecedents in conventional tires.

It should be noted, in passing, that in the illustrated construction of the tire 21, the carcass 33 is constituted by a single ply of tire cords disposed in radial planes, i.e. with the cords running at an angle of substantially 90° to the mid-circumferential or median equatorial plane of the tire, and the belt 34 (as is conventional in radial ply tires) is constituted by a superposed pair of plies 34a and 34b of tire cords extending generally circumferentially of the tire at opposed relatively low bias angles to the mid-circumferential plane, i.e. with the cords in each belt ply running at an angle of about 15—35°, and preferably about 25°, to the mid-circumferential plane and crossing the cords of the other belt ply. Also, the tire cords of the carcass and the belt may be made of any of the materials that are conventionally used by tire manufacturers in such products, namely, rayon, nylon, polyester, steel, glass fiber, aramid fiber, and the like. Correspondingly, the drum 22 and its component parts and adjuncts will generally be made of metal, but they could be molded of suitable reinforced plastics, e.g. molded fiberglass. It will be understood, however, that one or more of these known aspects of the various constructions described could be modified as desired.

As best shown in Figs. 1, 2 and 3, the tire and drum combination according to the present invention further includes a pair of ring members 37 and 38 which are contoured to define respective bead seats 37a and 38a tapering radially inwardly of the tire at angles of approximately 5° to the tire axis (i.e. with a tolerance of about +1°) and respective contiguous bead restraining flanges 37b and 38b, the latter extending generally radially outwardly of the tire almost perpendicularly to the tire axis and having respective sidewall-supporting extensions 37c and 38c oriented at relatively shallow angles of about 25° to the tire axis. The ring members further have respective outer peripheral extensions 37d and 38d which (for a purpose that will become clear as the description proceeds) are oriented to extend almost parallel to the tire axis.

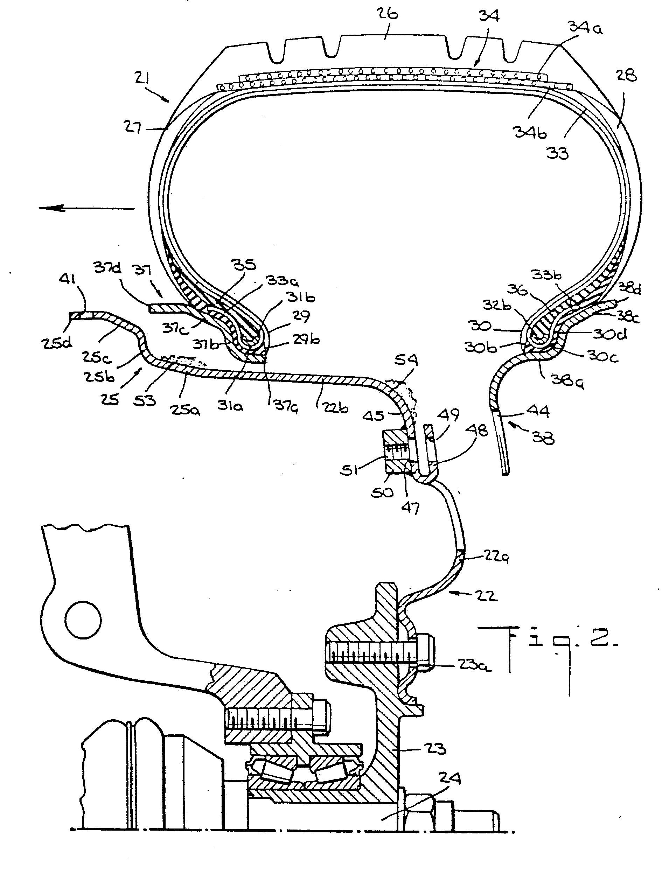

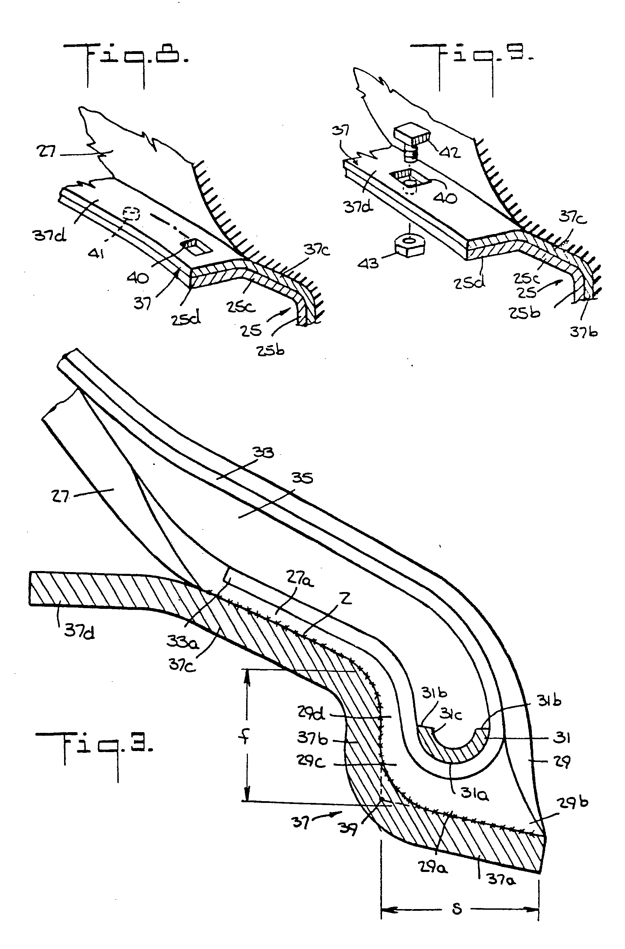

The ring members 37 and 38 are permanently adhered to the tire 21 at the inboard and outboard sides of the tire. Thus, the zone of adhesion between the sections 37a, 37b and 37c of the inboard ring member 37 and the tire (this zone is designated Z and is diagrammatically represented by the cross-hatching in Fig. 3) extends over the surface of the foot 29a of the bead 29 from its heel 29b to its toe 29c, thence over the outer surface of the side portion 29d of the bead, and finally over the outer surface of the region 27a of the inboard sidewall 27 located just radially outwardly of and contiguous to the bead 29. The zone of adhesion between the sections 38a, 38b and 38c of the outboard ring member 38 and the tire correspondingly extends over the surface of the foot 30a of the bead 30 from its heel 30b to its toe 30c, thence over the outer surface of the side portion 30d of the bead 30, and finally over the outer surface of the region 28a of the outboard sidewall 28 located just radially outwardly of and contiguous to the bead 30. The adhesive attachment of the ring members 37 and 38 to the tire can, of course, be effected during the manufacture of the tire by vulcanizing the ring members (if need be, suitably pretreated with a metal-to-rubber or a plastics-to-rubber adhesion-promoting substance of any of the types well known in the art) directly to the tire in the mold. Alternatively, however, it may be effected after the manufacture of the tire per se by adhering the ring members to the appropriate portions of the tire with the aid of suitable adhesive or bonding agents known in the industry for bonding rubber to metals, for example, adhesives such as are available commercially from Load Manufacturing Company under the registered trademark CHEM-LOK.

As further clearly shown in Figs. 1, 2 and 3, the turned-up portions 33a and 33b of the carcass ply 33 are considerably shorter than is usually the case in conventional tires. In particular, the ply turn-ups terminate and are completely confined within the portions of the adhesion zones defined between the sections 37c and 38c of the ring members 37 and 38 and the respective tire sidewall regions 27a and 28a. Concomitantly, the rubber apex or filler strips 35 and 36 used preferably have a relatively high Shore "A" hardness (on the order of about 90—94) and are considerably longer than is usually the case in conventional tires. In particular, the apex strips extend from the bead reinforcements 31 and 32 into the sidewalls 27 and 28 and terminate beyond the adhesion zones but short of the widest portion of the tire, i.e. short of the location of the greatest separation, denoted by the dimension g in Fig. 1, between the sidewalls 27 and 28. Preferably the apex strips terminate at a location between about 1/4 and 1/3 of the section height of the tire, the section height, denoted by the dimension h in Fig. 1, being the distance from a line parallel to the axis of the tire and constituting the toe ring diameter of the tire to a line parallel to the axis and tangent to the outer surface of the tread at its apex (i.e. at the mid-circumferential plane). In the present case the toe ring diameter is taken to be the line, parallel to the tire axis, which passes through the two points of intersection (only one of these, designated 39, is shown in Fig. 3 only) between the imaginary straight-line extensions of the tapered bottom surfaces of the bead portions 29a and 30a on the one hand and the associated generally radial outer side surfaces of the bead portions 29d and 30d on the other hand.

The utilization of these features leads to a number of advantages. One is due to the fact that, with the carcass ply turnups 33a and 33b terminating in the lower or radially inwardmost sidewall portions 27a and 28a, the remaining outer portions of the sidewalls are free of the mechanical discontinuities that would otherwise be present therein were the cut ends of the ply turn-ups to be located in the outer sidewall portions beyond the ends of the adhesion zones. This arrangement, therefore, effectively renders impossible the occurrence of turn-up ply separations in the outer sidewall portions (which is a substantial risk in a conventional tire because the sidewalls thereof, where the ply turn-ups terminate, are subject to severe flexural stresses whenever the tire rolls over the ground under load). Turn-up ply separations cannot occur at all in the lower sidewall regions 27a and 28a because the same are not subject to any flexural stresses when the tire is in use, being adhered to as well as fully supported by the ring member sections 37c and 38c.

Another advantage is due to the fact that the supported lower sidewall regions 27a and 28a are oriented at relatively shallow angles of about 25° to the tire axis (in what may be termed in effect a cantilever arrangement). This arrangement has certain beneficial effects on the ride and handling properties of the tire, i.e. it imparts an acceptible vertical elasticity to the tire and thereby tends to compensate for the hereinbefore mentioned somewhat less desirable prpoerties of the tire that result from its low aspect ratio. Moreover, the adhesion of the lower sidewall regions and the beads to the respective sections of the the ring members in the manner shown ensures that circumferential bead slippage, radial bead rocking and bead roll-off, and bead chafing are effectively inhibited. The purpose of the angling of the ring member extensions 37d and 38d downwardly or radially inwardly relative to the sections 37c and 38c, and hence away from the unsupported regions of the sidewalls 27 and 28, will now also be clear. Thus, by virtue of this arrangement the potential for a bead chafing-like rubbing contact between the ring members and the tire sidewalls where the unsupported regions thereof adjoin the supported and adhered regions is substantially minimized.

As previously mentioned, the tire according to the present invention is also characterized by novel internal bead reinforcements. Basically, these novel bead reinforcements can have various cross-sectional configurations, as will be more fully described hereinafter, but in all cases each reinforcement will be in the form of a solid single-body or unitary metal member having no free ends, which can be achieved, for example, either by directly forming the member as a full ring or by first forming the member as a linear body, then bending the same into a circle of appropriate diameter to bring the ends of the body into contact with each other, and finally butt-welding the said ends to each other. Furthermore, in accordance with the presently contemplated best mode of practicing the invention, the reinforcing members 31 and 32 preferably also have a generally U-shaped cross-section with a substantially uniform wall thickness. Thus, as best shown in Fig. 3 for the inboard bead reinforcement 31, the same is characterized by an inner surface 31a of convexly semicircular curvature and an outer surface having a pair of flat, circumferentially extending, lateral regions 31b and therebetween a circumferentially extending, medial, outwardly open channel 31c of concavely semicircular curvature. Correspondingly, the outboard bead reinforcement 32 is identical in all respects with the reinforcement 31, as can be seen from Figs. 1, 2 and 10, being characterized in the preferred form by an inner surface 32a of convexly semicircular curvature and an outer surface having a pair of flat, circumferentially extending, lateral regions 32b and a medial, outwardly open, circumferentially extending channel 32c. The terms "inner" and "outer" as applied to the surfaces of the reinforcement members 31 and 32, it should be understood, are here used to denote the respective surfaces of the annular or ring-shaped reinforcements which are directed inwardly and outwardly of the latter. The specific cross-sectional dimensions of each such bead reinforcement (namely, the radius of curvature of its inner surface 31a or 32a, the radius of curvature of its channel 31c or 32c, the "height" of the U, i.e. the distance from the plane of the ends of the legs 31b or 32b of the U to a plane tangent to the bottom of the U at its center line, and the wall thickness of the U, i.e. the difference between the said two radii) will, of course, depend on the size of the tire in which the reinforcement member is incorporated and on the stresses to which it will be subjected in use. As a matter of general design, however, it is contemplated the dimensions of each single-body single-turn reinforcement intended for use in a tire of a given rim size or bead diameter should be such as to provide such reinforcement with a metal surface area equal to approximately 50% of the metal surface area of a conventional multiple-wire multiple-turn bead core bundle intended for use in a correspondingly sized conventional tire. It will be apparent, therefore, that the bead reinforcements 31 and 32 are considerably smaller in volume and less bulky than conventional multiple-turn multiple-wire bead core bundles.

It will also be understood that the use of such small bead reinforcements in the form of solid, single-turn, single-body endless metal members in lieu of the conventional multiple-turn multiple-wire bead core bundles is rendered possible by the confluence of a number of different factors. One of these is the fact that the bead reinforcements 31 and 32 of the present invention will generally not be subjected, during the manufacture of the tire 21, during the mounting or demounting of the tire on the drum 22, and when the tire is in use, to the types of distortions and flexural stresses to which conventional bead wire cores are subjected. In this regard, moreover, it will be understood that the formation of the reinforcements with a substantially U-shaped cross-section through the provision of the longitudinal or circumferential channels in their outer surfaces entails two additional advantages. On the one hand, the presence of the upstanding lateral wall portions bounding the channel, i.e. the legs of the U, ensures that the metal members have sufficient beam strength and stiffness (resistance to flexure) to withstand, with an adequate margin of safety, such stresses as they will be subjected to during handling as well as in use. On the other hand, the absence of material represented by the channels not only does not have an adverse effect on the strength and stiffness of the reinforcements but at the same time enables the weight of the reinforcements to be reduced as much as possible. Merely by way of example, whereas a conventional rubber-impregnated bead wire core bundle for a 37.02 cm (13 inch) bead diameter tire would weigh on the order of about 156 g (5.5 ounces), a bead reinforcement according to the present invention would have a weight of about 56.7 g (2 ounces), which constitutes a weight saving of well over 60%, conventional rubber-impregnated bead wire core bundle for a 13-inch bead diameter tire would weigh on the order of about 5.5 ounces, a bead reinforcement according to the present invention would have a weight of about 2 ounces, which constitutes a weight saving of well over 60%.

Still others of the various factors which render the use of such small bead reinforcements possible are the fact that the tire has a low height ratio and the fact that the ring members 37 and 38, due to their adhesion to the beads and lower sidewall regions of the tire, aid the bead reinforcements in supporting the inflation forces encountered in the bead areas. At the same time, by virtue of the fact that the head reinforcements of the present invention are considerably smaller in bulk or volume than the conventional bead wire core bundles, not only the beads 29 and 30 themselves but also the corresponding bead seat sections 37a/38a and bead restraining flange sections 37b/38b of the ring members 37 and 38 may be made considerably smaller than they would have to be in a conventional tire/wheel combination. Merely by way of example, in a typical 33.02 cm bead diameter tire according to the present invention, the widths of the bead feet 29a/30a and of the bead seat portions 37a/38a of the ring members, and the heights of the bead sides 29d/30d and of the bead restraining flange portions 37b/38b of the ring members, denoted by the respective dimensions s and f in Fig. 3, are 1.14 cm (0.450 inch) and 0.89 cm (0.350 inch), respectively. Both of these dimensions are substantially less than the dimensions of corresponding elements of conventional tires and wheel rims. The presence of smaller beads in the tires means of course, that the tires contain smaller quantities of rubber in the beads and the contiguous lower regions of the sidewalls. As a consequence, the weight of the tires and therethrough the overall weight of the vehicle on which the tires are mounted are materially reduced with respect to corresponding conventional tires. Another advantage accruing is, therefore, the fact that the amount of energy consumed in driving a vehicle riding on tire/drum combinations according to the present invention is correspondingly reduced.

Merely in passing it should be noted that although bead reinforcements having the semicircular channeled cross-sectional configurations illustrated and so far described herein are preferred, the bead reinforcements may have slightly different cross-sectional configurations.

Thus, the inner surfaces 31a/32a and the outer longitudinal channels 31c/32c of the reinforcements need not be precisely of semicircular curvature but could be otherwise arcuate (parabolic, hyperbolic, etc.). The legs of the U may also have free end sections that are linear, i.e. non-circular, and preferably parallel extensions of the circularly curved portions. The overall cross-sectional configuration could even be generally crescent-shaped, i.e. with the channel having a somewhat greater radius of curvature than the inner surface of the reinforcement member and with the wall thickness of the reinforcement cross-section as a consequence not being uniform throughout from one not necessarily flat lateral edge to the other. It would also be possible for the channel to be in the form of a narrow groove or even omitted altogether. As a still further alternative, the inner surface of the bead reinforcement may even have at least one generally flat circumferential portion, although in such a case it would be preferred for the lateral boundaries of any such portion to be rounded. It will be understood, however, that such an arrangement too is to be considered an arcuate surface configuration.

In any event, the herein disclosed semicircular configuration is preferred primarily because this is a good contour for the purposes of the tire building and shaping operations, in that it makes for a smooth fitting and rotation of the tire body plies around the reinforcements while at the same time providing an absence of relatively sudden directional changes for the portions of the plies passing about the reinforcements.

It is contemplated that the radially inwardmost sections of the apex or filler strips 35 and 36 will be contoured in accordance with the contours of the outer surface of the reinforcements. Thus, where the bead reinforcements are provided with outer channels, such as 31c/32c, the apex strips in a corresponding fashion would be provided with peripheral projecting ribs matched to extend into the channels, thereby to provide a better interlock between the apex strips and the bead reinforcements during the tire building and shaping operations as well as in the finished tire.

Reverting now to the ring members 37 and 38, it will be understood that the manner of attachment thereof to the drum 32, which can best be comprehended from Figs. 1, 2 and 4 to 9, should be such as to fulfill certain specific objectives.

Principally, of course, the attachment system must serve to ensure the proper location of the tire 21 on the drum and relative to the vehicle axle. The attachment system must also be such as to render and maintain the tire/drum combination fully airtight under all anticipated normal conditions of use, and it must be sufficiently sturdy to withstand the severe stresses to which it will be subjected while the tire is in service. Still further, the attachment system should be simple enough to permit the tire to be readily mounted on and demounted from the drum without entailing the imposition, during such operations, of any undue stresses on and deformations of the beads 29 and 30 and the bead reinforcements 31 and 32. Finally, in somewhat of a contradiction to the aforesaid simplicity, it is contemplated that the attachment system, because of the uniqueness of the tire/drum combination and the complete departure of its construction from that of the heretofore conventional tire and wheel arrangements, should nevertheless also be so constructed as to inhibit its dismantling without the use of special tools.

With the foregoing objectives kept in mind, it will be seen that the attachment system for the inboard ring member 37 is relatively simple. Basically, the ring member 37 has an overall configuration matched to that of the flange section 25 of the skirt 22b of the drum 22 (see Figs. 1 and 2). Thus, the said flange section has a portion 25a corresponding to the bead seat section 37a of the ring member 37, a portion 25b corresponding to the bead restraining flange section 37b, a portion 25c corresponding to the lower sidewall supporting section 37c, and a peripheral extension 25d corresponding to the peripheral extension 37d. The only difference between the two configurations is that, whereas the taper angle of the bead seat defining section 37a of the ring member 37 is about 5° to the axis of the tire, the taper angle of the portion 25a of the skirt flange section 25 is about 15° to the axis of the tire, as a result of which a small generally wedge-shaped space is formed between the ring member 37 and the skirt 22b at the region of juncture therebetween when the ring member is mounted on the drum.

Referring now also to Figs. 8 and 9, it will be seen that the attachment means which enable the ring member 37 to be securely fastened to the drum 22 include the peripheral extension 37d of the ring member and the extension 25d of the skirt flange section 25, the respective sets of circumferentially distributed openings or bores 40 and 41 formed therein, and the associated fasteners in the form of bolts 42 and nuts 43. It will be understood, of course, that the actual number of paired openings 40/41 and bolt and nut combinations 42/43 that will be required to effect a secure attachment of the ring member 37 to the drum 22 may vary for tires of different sizes and different intended conditions of use and hence will be selected as desired, but it is contemplated that preferably at least about ten and possibly as many as a dozen or more such fastening means should be employed as a minimum. It will also be apparent that the precise form of the fastening mechanism may likewise be varied as desired. Merely by way of example, in the illustrated embodiment thereof the openings 40 in the ring member extension 37d as well as the heads of the bolts 42 are square in outline, while the bores 41 in the flange section extension 25d and the threaded shanks of the bolts are circular in outline, so that the bolts 42, the shanks of which are sufficiently long to extend through the flange section extension 25d, can be prevented from rotating while the respective nuts 43 are tightened against the underside of the extension 25d.

By way of contrast to the foregoing, the attachment system for the outboard ring member 38 is somewhat more complex. Referring now more particularly to Figs. 4 to 7 in conjunction with Figs. 1 and 2, it will be seen that the outboard ring member 38, in addition to the sections 38a to 38d already described, has a circumferential laterally inwardmost portion in the form of a plurality of projecting parts 44 adapted to closely overlie a circumferential radially outwardmost portion 45 of the drum body 22a. Each of the projecting parts 44 is provided with a respective opening 46, and correspondingly the drum body portion 45 is provided with a plurality of openings 47. The drum body is further provided with a plurality of struck-out parts 48 which are bent up to overlie the radially outwardmost portion 45 of the drum body. Each of the struck-out parts 48, the number of which is equal to the number of projecting parts 44 on the outboard ring member 38, is provided with an opening 49 aligned with the respective opening 47 in the drum body portion 45. On its inboard side the drum body 22a is further provided with a plurality of bushings 50 which are welded or otherwise permanently secured to the drum body and have respective internally threaded bores 51 which are aligned with the openings 47 and 49. The openings 46, 47 and 49 are dimensioned to accommodate freely the threaded shank of a suitable bolt 52, which is adapted to extend through each set of such openings and be tightly screwed into the bores 51 of the bushings 50.

The manner of attaching the outboard ring member 38 to the drum 22 will best be comprehended from Figs. 6 and 7. As clearly shown in Fig. 6, the circumferential widths of the spaces between struck-out parts 48 of the drum body 22a are somewhat larger than the circumferential widths of the projecting parts 44 of the outboard ring member 38. At the same time, the spaces or gaps between the bent up struck-out parts 48 of the drum body and the radially outwardmost portion 45 of the drum body which they overlie are sufficient to accommodate the thickness of the projecting parts 44 of the outboard ring member. To connect the latter to the drum, therefore, the said projecting parts are first introduced into the spaces between the struck-out parts of the drum body (Fig. 6) and the ring member is then rotationally displaced, for example in the direction of the arrow shown in Fig. 6, to shift the projecting parts 44 into the respective spaces between the struck-out parts 48 and the radially outwardmost portion 45 of the drum body. This operation is continued until the openings 46 are aligned with the openings 47 and 49 and the bores 51 (Fig. 7). When the ring member 38 has reached this position, the bolts 52 are screwed into the bushings 50 and tightened against the outermost surfaces of the struck-out parts 48. Here too it will be understood that, as in the case of the inboard ring member, the number of sets of associated struck-out parts, projecting parts, bushings and bolts can be varied as desired, depending on the strength of the connection required, but again it is contemplated that preferably at least ten and possibly as many as twelve or more such fastening means should be utilized.

The manner in which a tire 21, having a pair of inboard and outboard ring members 37 and 38 adhered thereto, is mounted on and attached to a drum 22 will now be described. For the purposes of this description, it should be noted, it is assumed that the drum has already been itself mounted on a vehicle axle hub 23 and securely fastened thereto by means of bolts 23a, but it will be understood that the tire could be mounted on and attached to the drum first while the latter is held in a suitable fixture or jig off the vehicle, with the entire combination then being transferred to the vehicle. The term "vehicle axle-borne drum" as used herein should, therefore, be interpreted as denoting a drum which either is or subsequently will be secured to a vehicle axle hub.

As the first step of the operation, then, two circumferentially continuous strip- or layer-shaped quantities 53 and 54 of a suitable sealant, preferably a sealing compound of any of the hereinbefore referred to types disclosed by U.S. Patents Nos. 3,981,342, 4,012,567 and 4,064,922,

are applied to the outer surface of the drum 22, one at the inboard region where the skirt 22b merges into the portion 25a of the flange section 25, and one at the region of juncture between the outboard end of the skirt and the radially outwardmost portion 45 of the drum body 22a. Thereafter, the tire 21, with the inboard ring member leading, is fitted over the skirt portion 22b of the drum in the direction of the arrow shown in Fig. 2, until the sections 37b, 37c and 37d of the ring member 37 lie fully on the corresponding portions of the flange section 25 of the drum skirt and the ring member section 37a presses tightly against the quantity of sealant 53 at the portion 25a of the drum skirt. The fitting of the inboard ring member over the drum skirt is, of course, greatly facilitated by the fact that the skirt tapers, albeit at a relatively shallow angle of about 3° to the tire axis, from the flanged inboard end to the unflanged outboard end of the drum, thus being somewhat narrower at the outboard end. During this stage of the operation, of course, care must be taken that the tire is being manipulated so as to have the projecting parts 44 of the outboard ring member 38 lined up with the circumferential spaces between the bent up struck-out parts 48 of the drum body 22a. When the inboard ring member is seated against the skirt flange section 25, therefore, the openings 40 and 41, though in circumferential alignment, will be out of vertical registry with each other, as shown in Fig. 8, to an extent corresponding to the then existing off-sets between the openings 46 and 49.

Once this condition has been attained, the outboard sidewall 28 of the tire is pushed inboardly until the projecting parts 44 of the outboard ring member are received in the spaces between the struck-out parts 48 and are pressed against the quantity of sealant 54, with the projecting parts circumferentially aligned with the gaps between the drum body portion 45 and the struck-out parts 48. The tire is then rotationally displaced, in the direction of the arrows shown in Fig. 6 and 8, to bring the projecting parts 44 into the said gaps or spaces behind the struck-out parts 48, this movement being continued until the openings 46 come into alignment with the opening 47/49 and the bore 51, at which time the openings 40 in the inboard ring member extension 37d will likewise have come into registry with the openings 41 in the skirt flange extension 25d. The respective bolts 42 and 52 can then be fitted through their respective sets of aligned holes and tightened in place, in the one case by the affixation of the nuts 43 onto the bolts 42 and in the other case by the screwing of the bolts 52 into the bores 51, thereby to securely attach the ring members to the drum. The tightening of the ring members 37 and 38 in place is, of course, effected with at least some of the respective quantities of sealant being confined between the ring members and the drum, while the remaining portions of the sealant lie outside these regions of confinement but still along the respective regions of juncture between the ring members and the drum, as shown in Fig. 1. The interior of the tire is thus rendered fully airtight, with no possibility of air losses occurring past the ring members.

As previously mentioned, it is contemplated by the present invention that, although the mounting procedure described in relatively simple, it should be sufficiently difficult to discourage its being attempted by any person (including the driver) not equipped with special tools. It is to this end that the bolts 23a and 52 both are shown as being provided, for example, with internally hexagonal heads (Figs. 6 and 7) requiring special tools for their manipulation. Thus, in the event of the tire 21 becoming punctured and deflated, the motorist will normally not be able to demount the flat tire and replace it by a space. Rather, he or she will be forced to proceed to the nearest service station for the performance of such repairs as will be necessary. Such a course of conduct would, of course, be very likely to create severe difficulties in the case of an ordinary tire/wheel combination having substantially no run-flat capability, since in that case, if the vehicle were to be driven a considerable distance with the tire flat, either the tire or the wheel rim or both could be substantially ruined and rendered completely unfit for further use. Thus, the ability to change a flat tire (i.e. to replace it with a spare tire) in an almost absolute necessity in the case of a vehicle riding on conventional tire/wheel combinations. A tire/ drum combination according to the present invention is not so restricted, however. Thus, since by virtue of its adhesion to the ring members and the fastening of the latter to the drum, the tire 21 cannot become separated from the ring members, the tire/drum combination according to the present invention does possess a substantial run-flat capability and could be driven for considerable distances at reasonable speeds without risking ruination of either the tire or the drum.

Reverting now to the mounting operation described above, once that operation has been completed and the tire is securely mounted, it is necessary to inflate the tire to the desired operating pressure. To this end we contemplate the provision of a novel valving system for the tire which avoids the needs for the inclusion of a standard tire inflation valve in the outboard ring member. Such valves, as has been mentioned previously, frequently lead to air losses from the tire, which may take place either through the valve itself because of dirt or some mechanical defect therein or through the hole in the wheel rim in which the valve is mounted.

Referring now more particularly to Fig. 10, the valving system by which this problem is effectively overcome includes, in the illustrated form, a small depression or embossment 55 in the outboard ring member 38, the bottom of which depression is directed outwardly of the tire. A small hole 56 provided in the bottom of the depression 55 constitutes a passageway which is open both at the inside surface and at the outside surface of the ring member. The depression contains a quantity of sealant 57, preferably the same sealant as is used to seal the regions of juncture between the ring members and the drum, which is in direct contact with the ring member surface and completely covers the opening 56. The depression is located intermediate on the one hand the zone of adhesion between the bead 30 and the ring member 38 and on the other hand the region where the ring member 38 adjoins the outer peripheral portion of the drum 22. It will be understood, in this regard, that the quantity of sealant 57 could be applied separately to the interior of the depression 55 at the same time as the quantities of the sealant 53 and 54 are applied to the outer surface of the drum. Alternatively, it would also be possible to avoid this separate step and to utilize the quantity of sealant 54 to cover the opening in the bottom of the depression, which could be done by making this quantity of sealant sufficient that when the outboard ring member is pressed against the drum some of the sealant would be forced to flow into the depression 55 and thereby to cover the opening 56. In any event, it will be apparent that the sealant will thereafter prevent any flow of air through the opening 56, while inflation of the tire can be effected very simply by extending an inflation needle 58, having an air outlet opening 59 at one end and connected to an air hose 60 at its other end, through the opening 56 and the quantity of sealant 57. Upon insertion of the needle through the sealant (Fig. 11) the same will flow closely around the needle and escape of air will not be possible, while upon completion of the inflation operation and withdrawal of the needle (Fig. 12), the sealant will be drawn into the hole previously formed by the needle so as to seal the same as fully as if it had never existed.

As previously mentioned, one of the principal objectives is the provision of an optimized construction of the tire/drum combination. To this end it is contemplated to establish certain relations between the dimensions g, h and R of the tire and the dimension j of the mounting system (all of which dimensions are shown in Fig. 1) and hence to establish certain relations between as well as value ranges for the aspect ratio $\lambda$, the height ratio $\theta$ and the ring width ratio $v$. These ratios are represented by the equations

$\lambda = h/g$,
$\theta = h/R$, and
$v = j/g$,

where g is the distance, in a direction parallel to the tire axis, between the most widely separated portions of the sidewalls of the tire; h is the radial dimension of the tire as measured from the toe ring diameter to a line parallel to the tire axis and tangent to the outer surface of the tread at its apex (i.e. where it is intersected by the median equatorial or mid-circumferential plane of the tire); j is the distance, in a direction parallel to the tire axis, between the outer extremities of the adhesion zones, i.e. between the laterally outwardmost ends of the sidewall-supporting extensions 37c and 38c, of the inboard and outboard ring members; and R is the radial distance from the axis of the tire to the aforesaid line tangent to the tread at its apex. The aspect ratio, the height ratio and the ring width ratio should conform substantially to the relations

$$\lambda = \frac{0.236}{\theta}$$

$$0.32 < \theta < 0.39, \text{ and}$$

$$v = 1 - \frac{\lambda}{4}$$

and with the height ratio at its maximum being lower than the minimum height ratio of conventional P-metric tires (0.40 and above to more than 0.50), an aspect ratio as low as 0.60 or so and in any event lower than about 0.74 can be achieved. In this regard, it should be noted that the value of $\lambda$ (the aspect ratio) characterizing the tire need not lie precisely on the curve represented by a plot of $\lambda$ against $\theta$ in accordance with the first two of the above relations, but could deviate therefrom to a limited degree, say to the extent of about ±5%, and the term "conform substantially" as used herein with respect to the aspect ratio should, therefore, be interpreted as embracing a deviation of this magnitude. The existence and maintenance of these relations, in conjunction wiht the other physical characteristics of the tire/drum combination hereinbefore described, enables a reduction of stresses in the sidewalls to be achieved along with good tire performance (wear resistance, fatigue resistance, ride and handling), a reduction in tire weight for a given load-carrying capacity, the ability to use a single ply carcass having low ply turn-ups around lighter and thinner bead reinforcements, and the ability to eliminate the usual spare tire altogether.

**Claims**

1. A tubeless pneumatic tire (21) which has a generally toroidal shape defining a circumferential crown region, a tread (26) overlying the crown region, and a pair of sidewalls (27, 28) extending generally radially inwardly from the tread and terminating in a pair of circumferential interiorly reinforced beads (29, 30), two rings members (37, 38) constituting parts of a mounting system (22, 25, 37, 38) for the tire and each defining a respective bead seat (37a, 38a), an associated bead restraining flange (37b, 38b) and an associated sidewall-supporting extension (37c, 38c) from the bead restraining flange, the ring members being adhered to the tire at the inboard and outboard sides of the tire, respectively, the zone of adhesion (Z) in each case extending over the surface of the foot (29a, 30a) of the respective bead characterised in that said zone of adhesion (Z) further extends over the axially outer side (29d, 30d) of the respective bead and thence over the surface of the portion (27a, 28a) of the associated sidewall (27, 28) located just radially outwardly of and contiguous to the bead, and each of said ring members (37, 38) is constructed and arranged for releasable attachment thereof to a vehicle axle-borne drum (22) constituting another part of the mounting system for the tire.

2. A tubeless pneumatic tire as claimed in Claim 1 and including a reinforcing carcass (33) underlying the tread (26) and sidewalls (27, 28) of the tire, the carcass including a ply (33) of tire cords disposed in substantially radial planes of the tire and extending from one bead (29, 30) to the other, the opposite end regions (33a, 33b) of the ply being turned up around the interior reinforcements (31, 32) of the beads, and a tread-reinforcing belt (34) of tire cords underlying the tread (26) in the crown region of the tire; characterized in that the turned-up portions (33a, 33b) of said carcass ply terminate within the respective zones of adhesion between said exensions (37c, 38c) of said ring members (37, 38) and said portions of the associated sidewalls, thereby to ensure the absence of any mechanical discontinuities in the portions of the sidewalls subject to flexure during operation of the tire.

3. A tubeless pneumatic tire as claimed in Claim 1 or Claim 2 characterized in that, when the tire is mounted with its beads (29, 30) confined between said bead restraining flanges (37b, 38b) and it is in an inflated, unloaded state, the height ratio θ=h/R and the aspect ratio λ=h/g of the tire conform substantially to the relation

$$\lambda = \frac{0.236}{\theta}$$

wherein 0.32<0<0.39, R is the radial dimension of the tire from its axis to a first line parallel to the axis and tangent to the outer tread surface at the apex of the crown region, h is the radial dimension of the tire from a second line parallel to the axis and constituting the toe ring diameter of the tire to said first line, and g is the distance, in a direction parallel wo the axis, between the most widely separated portions of the two sidewalls.

4. A tubeless pneumatic tire as claimed in Claim 3 characterized in that when the tire is mounted with its beads (29, 30) confined between said bead restraining flanges (37b, 38b) and with its lower sidewall portions contiguous to said beads (29, 30) supported by respective lateral extensions (37c, 38c) of said bead restraining flanges (37b, 38b), and when the tire is in an inflated unloaded state, the ring width ratio

$$v=j/g=1-\frac{\lambda}{4}$$

where j is the distance, in a direction parallel to the tire axis, between the outer extremities of said extensions.

5. A tubeless pneumatic tire as claimed in any one of Claims 1 to 4 characterized in that the outer surface of the portion (27a, 28a) of each of said sidewalls (27, 28) located just radially outwardly of and contiguous to the respective bead (29, 30) in said zone of adhesion and said extension (37c, 38c) of the associated ring member to which that sidewall surface portion is adhered are inclined at an angle of approximately 25° to the axis of the tire.

6. A tubeless pneumatic tire as claimed in any one of Claims 1 to 5, characterized in that the surface of the foot (29a, 30a) of each bead (29, 30) form its toe to its heel in said zone of adhesion and the bead seat portion (37a, 38a) of the associated ring member to which that bead foot surface is adhered taper radially inwardly of the tire at an angle of approximately 5° to the axis of the tire.

7. A tubeless pneumatic tire as claimed in any one of Claims 1 to 6 characterized in that the interior reinforcement of each bead (29, 30) is a single metal member (31, 32) in the form of a single loop having a radially inner (31a, 32a) and a radially outer (31b and 31c, 32b and 32c) surface and no free ends, said radially inner surface of said metal member in cross-section being convexly arcuate towards the loop centre.

8. A tubeless pneumatic tire as claimed in any one of Claims 1 to 7, characterized in that an apex strip (35, 36) is incorporated in the portion of each sidewall located just radially outwardly of and contiguous to the respective bead (29, 30), each said apex strip extending from its associated interior reinforcement of the bead and terminating beyond said zone of adhesion but radially inwardly of the widest portion of the tire section.

9. A tubeless pneumatic tire as claimed in Claim 8 characterized in that the radially inwardmost end region of each said apex strip (35, 36) is located at and mated to said associated interior reinforcement (31, 32).

10. A tubeless pneumatic tire as claimed in Claim 8 or Claim 9 characterized in that each said apex strip (35, 36) terminates at a line parallel to the axis of the tire and located in the region between 1/4 and 1/3 of the height (h) of the tire section as measured from a line which is parallel to the tire axis and constitutes the toe ring diameter of the tire to a line which is parallel to the tire axis and is tangent to the outer surface of the tread at the apex of the crown region.

11. A tubeless pneumatic tire as claimed in any one of Claims 1 to 10, characterized in that the outboard one (38) of said ring member is provided with a depression (55) having its bottom directed outwardly of the tire and located intermediate said zone of adhesion and the portion of that ring member where the same adjoins the vehicle axle-borne drum when attached thereto, said outboard ring member (38) being further provided with a small hole (56) in the bottom of said depression (55), and said depression being adapted to contain or containing a quantity of a sealant (57) having self-sealing properties, the depression (55) and the sealant (57) when the same is contained therein thereby constituting a valving system for the tire adapted to permit inflation of the tire by insertion of a hollow inflation needle through said hole (56) and said quantity of sealant (57).

12. A tire mounting system (22, 25, 37, 38) for use with a tubeless pneumatic tire (21) as claimed in any one of Claims 1 to 11, the mounting system including a drum (22) having a drum-body (22a) adapted to be secured to the hub (23) of a vehicle axle (24) and a peripheral skirt (22b) secured to said drum-body and extending therefrom in the inboard direction of the vehicle when the drum is properly mounted on the hub of the vehicle axle, said system further including two ring members (37, 38) each defining a respective bead seat (37a, 38a), an associated bead restraining flange (37b, 38b) and an associated sidewall-supporting extension (37c, 38c) of the latter, said ring members (37, 38) being adapted to be adhered to the tire at the inboard and outboard sides of the tire respectively, the zone of adhesion in each case extending over the surface of the foot of the respective bead, said outboard ring member (38) being contoured to dispose the outboard bead seat (38a), bead restraining flange (38b) and sidewall-supporting extension (38c) defined by said outboard ring member at locations relative to the axis of the tire corresponding to the locations of the inboard bead seat (37a), bead retraining flange (37b) and sidewall-supporting extension (37c) defined by said inboard ring member (37), characterised in that said skirt (22b) is provided at its inboard lateral boundary with a circumferential flange section (25) and is devoid of any flange section at its outboard lateral boundary, that said inboard ring member (37) has contours corresponding substantially to those of said flange section (25) of said skirt (22b), and that there is provided first attachment means (40 to 43) for releasably securing the inboard ring member (37) to said skirt (22b) along said flange section (25) and second attachment means (50 to 52) for releasably securing the outboard ring member (38) to said drum-body (22a) adjacent the outboard lateral boundary of said skirt (22b).

13. A system as claimed in Claim 12; characterized in that in the mounting system said first attachment means include a circumferential laterally outwardmost portion (37d) of said inboard ring member (37) contiguous with said inboard sidewall-supporting extension (37c) and having a plurality of openings (40) therein, a circumferential laterally outwardmost portion (25d) of said flange section (25) of said skirt (22b) closely underlying said laterally outwardmost portion (37d) of said inboard ring member (37) and having a plurality of openings (41) therein each corresponding to a respective one of said openings (40) in said laterally outwardmost portion (37a) of said inboard ring member (37), and a plurality of fastening members (42, 43) extending through the respective associated ones of said openings (40, 41) in said laterally outwardmost portions of said inboard ring members and said flange section of said skirt and tightly securing the same to one another.

14. A system as claimed in Claim 12 or Claim 13 characterized in that in the mounting system said second attachment means (50 to 52) includes a circumferential radially outwardmost portion (45) of said body (22a) of said drum (22) having a plurality of openings therein (47), a circumferential laterally inwardmost portion (44) of said outboard ring member (38) closely overlying said radially outwardmost portion (45) mf said drum body (22a) and having a plurality of openings (46) therein each corresponding to a respective one of said openings (47) in said radially outwardmost portion (45) of said drum body (22a), and a plurality of fastening members (52) extending through the respective associated ones of said openings (46, 47) in said laterally inwardmost portion (44) of said outboard ring member (38) and said radially outwardmost portion (45) of said drum body (22a) and tightly securing the same to one another.

15. A system as claimed in Claim 14 characterized in that in the mounting system said drum body (22a) has a plurality of circumferentially spaced struck-out parts (48) each located radially inwardly of said radially outwardmost portion (45) of said drum body (22a) and bent up to overlie a respective one of said openings (47) in that portion of said drum body (22a) at a spacing therefrom sufficient to accommodate said laterally inwardmost portion (44) of said outboard ring member (38), each of said struck-out parts (48) having a respective opening (49) therein, said laterally inwardmost portion (44) of said outboard ring member (38) including a plurality of projecting parts (44) each received in a respective one of the spaces between said struck-out parts (48) and said radially outwardmost portion (45) of said drum body (22a), and each of said fastening members (52) extending thorugh a respective associated set of said openings (49, 47, 46) in said struckout parts, said projecting parts and said radially outwardmost portion of said drum body.

16. A system as claimed in Claim 15, characterized in that in the mounting system the circumferential spaces defined between adjacent ones of said bent up struck-out parts (48) of said drum body are somewhat greater than the circumferential widths of said projecting parts (44) of said laterally inwardmost portion of said outboard ring member (38), thereby to enable said projecting parts (44) to be fitted into said circumferential spaces and then introduced into the spaces between said radially outwardmost portion of said drum body and said struck-out parts of the latter by means of a rotational displacement of said tire relative to said drum.

17. A system as claimed in any one of Claims 12 to 16, characterized in that in the mounting system said skirt (22b) tapers radially inwardly at an angle of about 3° to the axis of the tire from said inboard flange section (25) to the outboard lateral boundary of said skirt where the same adjoins said body (22a) of said drum (22).

18. The combination of a tubeless pneumatic tire (21) as claimed in any one of Claims 1 to 11, together with a mounting system (22, 25, 37, 38) as claimed in any one of Claims 12 to 17, in which respective quantities of a sealant (53, 54) having self-sealing properties are located at the circumferential regions of juncture between said ring members (37, 38) and said skirt (22b) for rendering the interior of the tire (21) airtight.

**Patentansprüche**

1. Schlauchloser Luftreifen (21) mit einer allgemein ringförmigen Gestalt, die einen Umfangskronenbereich, eine den Kronenbereich überlagernde Lauffläche (26) und ein Paar von allgemein radial einwärts vom Kronenbereich verlaufenden sowie in einem Paar von umlaufenden, innenseitig verstärken Wulsten (29, 30) endenden Seitenwänden (27, 28) bestimmt, und mit zwei Ringgliedern (37, 38), die Teile eines Montagesystems (22, 25, 37, 38) für den Reifen bilden und jeweils je einen Wulstsitz (37a, 38a), einen damit verbundenen Wulst-Haltebund (37b, 38b) sowie einen vom Wulst-Haltebund ausgehenden, mit diesem verbundenen Seitenwand-Stützsteg (37c, 38c) bestimmen, wobei die Ringglieder mit dem Reifen jeweils an der innen- sowie außenliegenden Reifenseite haftend verbunden sind und die Haftzone (Z) sich in jedem Fall über die Fläche der zugeordneten Wulstsohle (29a, 30a) des jeweiligen Wulstes erstreckt, dadurch gekennzeichnet, daß die Haftzone (Z) weiter über das axial außenliegende Seitenteil (29d, 30d) des jeweiligen Wulstes und von dort über die Fläche des genau radial auswärts vom Wulst liegenden sowie an diesen angrenzenden Bereichts (27a, 28a) der zugeordneten Seitenwand (27, 28) verläuft und daß jedes der Ringglieder (37, 38) für seine lösbare Befestigung an einer fahrzeugachsseitig gelagerten, ein weiteres Teil des Montagesystems für den Reifen bildenden Radschüssel (22) aufgebaut sowie ausgestattet ist.

2. Schlauchloser Luftreifen nach Anspruch 1 mit einer unter der Lauffläche (26) und den Seitenwänden (27, 28) des Reifens liegenden Verstärkungskarkasse (33), die eine Lage (33) aus im wesentlichen in radialen Ebenen des Reifens angeordneten, vom einen zum anderen Wulst (29, 30) sich erstreckenden Reifenkörden umfaßt, wobei die einander gegenüberliegenden Endstücke (33a, 33b) der Lage um die inneren Wulstverstärkungen (31, 32) herumgeschlagen sind und ein Lauffächen-Verstärkungsgürtel (34) aus Reifenkorden im Kronenbereich des Reifens unter der Lauffläche (26) lieft, dadurch gekennzeichnet, daß die Lagenumschläge (33a, 33b) der Karkassenlage innerhalb der jeweiligen Haftbereiche zwischen den Stützstegen (37c, 38c) der Ringglieder (37, 38) und den Bereichen der zugeordneten Seitenwände enden, so daß das Fehlen von jeglichen mechanischen Unstetigkeiten in den einem Walken unterliegenden Seitenwandteilen im Betrieb des Reifens gewährleistet ist.

3. Schlauchloser Luftreifen nach Anspruch 1 oder 2, dadurch gekennzeichnet, daß mit zwischen den Wulst-Haltebunden (37b, 38b) eingeschlossenen Wulsten (29, 30) im montierten, aufgeblasenen sowie unbelasteten Zustand des Reitens des Höhenverhältnis $\theta = h/R$ und das Querschnittsverhältnis $\lambda = h/g$ des Reifens im wesentlichen der Beziehung

$$\lambda = \frac{0,236}{\theta}$$

entsprechen, worin $0,32 < \theta < 0,39$ ist, R die radiale Abmessung des Reifens von seiner Achse zu einer ersten, zur Achse parallelen und zur äußeren Lauffläche am Scheitel des Kronenbereichs tangentialen Linie ist, h die radiale Abmessung des Reifens von einer zweiten, zur Achse parallelen sowie den Zehenringdurchmesser des Reifens bildenden Linie zur genannten ersten Linie ist und g der Abstand in einer zur Achse parallelen Richtung zwischen den am weitesten voneinander getrennten Teilen der beiden Seitenwände ist.

4. Schlauchloser Luftreifen nach Anspruch 3, dadurch gekennzeichnet, daß mit zwischen den Wulst-Haltebunden (37b, 38b) eingeschlossenen Wulsten (29, 30) und mit von den jeweiligen lateralen Stützstegen (37c, 38c) der Wulst-Haltebunde (37b, 38b) getragenen, an die Wulste (29, 30) anschließenden unteren Seitenwandteilen im montierten, aufgeblasenen sowie unbelasteten Zustand des Reifens das Ringbreitenverhältnis

$$v = j/g = 1 - \frac{\lambda}{4}$$

ist, worin j der Abstand in einer zur Reifenachse parallelen Richtung zwischen den äußeren Enden der Stützstege ist.

5. Schlauchloser Luftreifen nach einem der ansprüche 1 bis 4, dadurch gekennzeichnet, daß die äußere Fläche des Bereichs (27a, 28a) einer jeden Seitenwand (27, 28), der gerade radial außerhalb vom sowie angrenzend an den jeweiligen Wulst (29, 30) in der Haftzone angeordnet ist, und der Stützsteg (37c, 38c) des zugehörigen Ringglieds, an dem der Seitenwandflächenbereich haftet, unter einem Winkel von annähernd 25° zur Achse des Reifens geneigt sind.

6. Schlauchloser Luftreifen nach einem der Ansprüche 1 bis 5, dadurch gekennzeichnet, daß die Fläche der Sohle (29a, 30a) eines jeden Wulstes (29, 30) von ihrer Ferse zu ihrer Zehe im Haftbereich und der Wulstsitz (37a, 38a) des zugeordneten Ringglieds, an dem die Wulstfußfläche haftet, radial einwärts des Reifens unter einem Winkel von annähernd 5° zur Reifenachse geneigt sind.

7. Schlauchloser Luftreifen nach einem der Ansprüche 1 bis 6, dadurch gekennzeichnet, daß die innere Verstärkung eines jeden Wulstes (29, 30) ein einzelnes Metallteil (31, 32) in Form einer einzigen Schleife mit einer radial inneren (31a, 32a) und einer radial äußeren (31b und 31c, 32b und 32c) Fläche sowie ohne freie Enden ist, wobei die radial innere Fläche des Metallteils im Querschnitt konvex zum Schleifenzentrum hin gekrümmt ist.

8. Schlauchloser Luftreifen nach einem der Ansprüche 1 bis 7, dadurch gekennzeichnet, daß ein Kernreiter (35, 36) in den gerade radial auswärts vom jeweiligen Wulst angeordneten und an den jeweiligen Wulst (29, 30) angrenzenden Teil einer jeden Seitenwand eingegliedert ist, wobei jeder Kernreiter von seiner zugeordneten inneren Verstärkung des Wulstes ausgeht und jenseits der Haftzone, jedoch radial einwärts vom breitesten Teil des Reifenquerschnitts endet.

9. Schlauchloser Luftreifen nach Anspruch 8, dadurch gekennzeichnet, daß der radial am weitesten innenliegende Endbereich eines jeden Kernreiters (35, 36) an der zugehörigen inneren Verstärkung (31, 32) angeordnet und dieser angepaßt ist.

10. Schlauchloser Luftreifen nach Anspruch 8 oder 9, dadurch gekennzeichnet, daß jeder Kernreiter (35, 36) an einer zur Reifenachse parallelen sowie im Bereich zwischen 1/4 und 1/3 der Höhe (h) des Reifenquerschnitts, gemessen von einer zur Reifenachse parallelen, den Zehenringdurchmesser des Reifens bildenden Linie zu einer zur Reifenachse parallelen, zur Außenfläche der Lauffläche am Scheitel des Kronenbereichs tangentialen Linie, endet.

11. Schlauchloser Luftreifen nach einem der Ansprüche 1 bis 10, dadurch gekennzeichnet, daß das außenseitige (38) der Ringglieder mit einer Ausbauchung (55), deren Boden auswärts des Reifens gerichtet und die zwischen dem Haftbereich sowie demjenigen Teil des Ringglieds an der Stelle angeordnet ist, an der dieses an die fahrzeugachsseitig gelagerte Radschüssel im an dieser befestigten Zustand anschließt, versehen ist, daß das außenseitige Ringglied (38) ferner ein kleines Loch (56) im Boden der Ausbauchung (55) aufweist und daß die Ausbauchung zur Aufnahme einer Menge eines Dichtungsmittels (57) mit selbstdichtenden Eigenschaften ausgebildet ist oder eine Menge eines solchen Dichtungsmittels enthält, wobei die Ausbachung (55) und das Dichtungsmittel (57) im in der Ausbauchung aufgenommenen Zustand ein Ventilsystem für den Reifen bilden, das ein Aufblasen des Reifens durch Einführen einer hohlen Reifenfüllnadel durch das Loch (56) sowie durch die Menge an Dichtungsmittel (57) ermöglicht.

12. Reifen-Montagesystem zur Verwendung bei einem schlauchlosen Luftreifen (21), wie er in einem der Ansprüche 1 bis 11 beansprucht ist, wobei das Montagesystem eine Radschüssel (22) mit einem zur Befestigung an der Nabe (23) einer Fahrzeugachse (24) geeigneten Schüsselkörper (22a) sowie mit einer umlaufenden, am Schüsselkörper befestigten und von diesem zur innenseitigen Richtung des Fahrzeugs im richtig montierten Zustand der Radschüssel an der Nabe der Fahrzeugachse sich erstreckenden Schulter (22b) und ferner zwei Ringglieder (37, 38), von denen jedes jeweils einen Wulstsitz (37a, 38a), einen damit verbundenen Wulst-Haltebund (37b, 38b) sowie einen mit diesem verbundenen Seitenwand-Stützsteg (37c, 38c) bildet, umfaßt und wobei die Ringglieder (37, 38) für ein Haften am Reifen an jeweils der innen- sowie außenliegenden Seite imstande sind, der Haftbereich sich in jedem Fall über die Fläche des jeweiligen Wulstfußes erstreckt, das äußere Ringglied (38) derart ausgestaltet ist, den äußeren Wulstsitz (38a), den Wulst-Haltebund (38b) sowie den Sietenwand-Stützsteg (38c), die von dem äußeren Ringglied bestimmt sind, an Orten mit Bezug zur Reifenachse anzuordnen, die mit den Orten des vom inneren Ringglied (37) bestimmten inneren Wulstsitzes (37a), Wulst-Haltebundes (37b) sowie Seitenwand-Stützsteges (37c) übereinstimmen, dadurch gekennzeichnet, daß die Schulter (22b) an ihrem inneren lateralen Randbereich mit einem inneren Umfangskranz (25) versehen und an ihrem äußeren lateralen Randbereich von jeglichem umlaufenden Kranz frei ist, daß das innere Ringglied (37) dem Umfangskranz (25) der Schulter (22b) im wesentlichen entsprechende Konturen aufweist und daß eine erste Befestigungseinrichtung (40 bis 43) zur lösbaren Befestigung des inneren Ringglieds (37) an der Schulter (22b) längs des Umfangskranzes (25) sowie eine zweite Befestigungseinrichtung (50 bis 52) zur lösbaren Befestigung des äußeren Ringglieds (38) benachbart zum äußerren lateralen Randbereich der Schulter (22b) am Schüsselkörper (22a) vorgesehen sind.

13. System nach Anspruch 12, dadurch gekennzeichnet, daß in dem Montagesystem die erste Befestigungseinrichtung ein settlich am weitesten außenliegendes, an den inneren Seitenwand-Stützsteg (37c) anschließendes, mit einer Mehrzahl von Öffnungen (40) versehenes Umfangsteil (37d) des inneren Ringglieds (37), ein seitlich am weitesten außenliegendes Teil (25d) des Umfangskranzes (25) der Schulter (22b), das dicht unter dem seitlich am weitesten außenliegenden Umfangsteil (37d) des inneren Ringglieds (37) angeordnet sowie mit einer Mehrzahl von Öffnungen (41), von denen jede mit jeweils einer der Öffnungen (40) im seitlich am weitesten außenliegenden Umfangsteil (37d) des inneren Ringglieds (37) übereinstimmt, versehen ist, und eine Mehrzahl von Befestigungsgliedern (42, 43), die sich durch jeweils zugeordnete der Öffnungen (40, 41) im seitlich am weitesten außenliegenden Umfangsteil des inneren Ringglieds sowie im Umfangskranz der Schulter erstrecken und diese beiden Bauteile eng aneinander befestigen, umfaßt.

14. System nach Anspruch 12 oder 13, dadurch gekennzeichnet, daß in dem Montagesystem die zweite Befestigungseinrichtung (50 bis 52) ein radial am weitesten außenliegendes, eine Mehrzahl von Löchern (47) aufweisendes Umfangsteil (45) des Schüsselkörpers (22a) der Radschüssel (22), ein lateral am weitesten innenliegendes Umfangsteil (44) des äußeren Ringglieds (38), das eng das radial am weitesten außenliegende Umfangsteil (45) des Schüsselkörpers (22) überdeckt sowie eine Mehrzahl von Löchern (46), von denen jedes einem zugeordneten der Löcher (47) in dem radial am weitesten außenliegenden Umfangsteil (45) des Schüsselkörpers (22a) entspricht, und eine Mehrzahl von Befestigungsgliedern (52), die sich durch die jeweils einander zugeordneten der Löcher (46, 47) in dem lateral am weitesten innenliegenden Umfangsteil (44) des äußeren Ringglieds (38) sowie in dem radial am weitesten außenliegenden Umfangsteil (45) des Schüsselkörpers (22a) erstrecken und diese beiden Bauteile eng aneinander befestigen, umfaßt.

15. System nach Anspruch 14, dadurch gekennzeichnet, daß in dem Montagesystem der Schüsselkörper (22a) eine Mehrzahl von in Umfangsrichtung beabstandeten ausgesteuzten lappen (48) aufweist, von denen jeder radial einwärts von dem radial am weitesten außenliegenden Umfangsteil (45) des Schüsselkörpers (22a) angeordnet und aufgebogen ist, um ein zugeordnetes der Löcher (47) in dem Umfangsteil des Schüsselkörpers (22a) mit einem Abstand von diesem, welcher zur Aufnahme des lateral am weitesten innenliegenden Umfangsteils (44) des äußeren Ringglieds (38) ausreichend ist, zu überdecken, daß jeder der ausgestanzten Lappen (48) jeweils ein Loch (49) hat, daß das lateral am weitesten innenliegende Umfangsteil (44) des äußeren Ringglieds (38) mit einer Mehrzahl von vorstehenden Teilen (44) versehen ist, von denen jedes in einem zugeordneten Abstandsraum zwischen den ausgestanzten Lappen (48) sowie dem radial am weitesten außenliegenden Umfangsteil (45) des Schüsselkörpers (22a) aufgenommen ist, und daß jedes der Befestigungsglieder (52) sich durch einen jeweils zugeordneten Satz von Löchern (49, 47, 46) in den ausgestanzten Lappen, in den vorstehenden Teilen und in dem radial am weitesten außenliegenden Umfangsteil des Schüsselkörpers erstreckt.

16. System nach Anspruch 15, dadurch gekennzeichnet, daß in dem Montagesystem die zwischen einander benachbarten ausgestanzten Lappen (48) des Schüsselkörpers in Umfangsrichtung bestimmten Zwischenräume etwas größer sind als die Breite der vorstehenden Teile (44) des lateral am weitesten innenliegenden Umfangsteils des äußeren Ringglieds (38), so daß die vorstehenden Teile (44) in die in der Umfangsrichtung vorhandenen Zwischenräume eingepaßt und dann in die Abstandsräume zwischen dem radial am weitesten außenliegenden Umfangsteil des Schüsselkörpers sowie dessen ausgestanzte Lappen durch eine drehende Verschiebung des Reifens mit Bezug zur Radschüssel eingesetzt werden können.

17. System nach einem der Ansprüche 12 bis 16, dadurch gekennzeichnet, daß in dem Montagesystem die Schulter (22b) radial einwärts unter einem Winkel von etwa 3° zur Reifenachse vom inneren Umfangskranz (25) zum äußeren lateralen Randbereich der Schulter, an dem diese an den Schüsselkörper (22a) der Radschüssel (22) angrenzt, geneigt ist.

18. Die Kombination eines schlauchlosen Luftreifens (21), wie er in einem der Ansprüche 1 bis 11 beansprucht ist, zusammen mit einem Montagesystem (22, 25, 37, 38), wie es in einem der Ansprüche 12 bis 17 beansprucht ist, wobei jeweilige Mengen eines Dichtungsmittels (53, 54) mit selbstdichtenden Eigenschaften an den Umfangsbereichen einer Verbindung zwischen den Ringgliedern (37, 38) und der Schulter (22b) zur luftdichten Abdichtung des Inneren des Reifens (21) angeordnet sind.

**Revendications**

1. Bandage pneumatique sans chambre à air (21) qui a une forme généralement toroïdale définissant une région circonférentielle de couronne, une bande de roulement (28) recouvrant la région de couronne, et une paire de flancs (27, 28) s'étendant généralement radialement vers l'intérieur de la bande de roulement et se terminant par une paire de bourrelets circonférentiels (29, 30) intérieurement renforcés, deux éléments formant bagues (37, 38) faisant partie d'un système de montage (22, 25, 37, 38) du pneumatique, chacun définissant un siège respectif de bourrelet (37a, 38a), un talon associé de retenue de bourrelet (37b, 38b) et une extension associée de support de flanc (37c, 38c) du talon de retenue de bourrelet, les éléments formant bagues adhérant au pneumatique aux côtés vers l'intérieur et vers l'extérieur du pneumatique, respectivement, la zone d'adhérance (7) dans chaque cas s'étendant sur la surface du pied (28a, 30a) du bourrelet respectif, caractérisé en ce que ladite zone d'adhérence (Z) s'étend de plus sur le côté axialement externe (29d, 30d) du bourrelet respectif et de la sur la surface de la partie (27a, 28a) du flanc associé (27, 28) qui se trouve juste radialement vers l'extérieur de et contiqué au bourrelet et chacun desdits éléments formant bagues (37, 38) est construit et agencé pour sa fixation détachable à un tambour (22) porte par l'essieu du véhicule, constituant une autre partie du système de montage du pneumatique.

2. Bandage pneumatique sans chambre à air selon la revendication 1 et comprenant une carcasse de renforcement (33) placée sous la bande de roulement (26) et les flancs (27, 28) du pneumatique, la carcasse comprenant une nappe (33) de cordes de pneumatique disposée sensiblement dans des plans radiaux du pneumatique et s'étendant d'un bourrelet (29, 30) à l'autre, les régions estrèmes opposées (33a, 33b) de la nappe étant retournées autour des renforcements intérieurs (31, 32) des bourrelets et une ceinture (34) de renforcement de bande de roulement de cordes de pneumatique située en dessous de la bande de roulement (26) dans la région de couronne du pneumatique; caractérisé en ce que les parties retournées (33a, 33b) de ladite nappe de carcasse se terminent dans les zones respectives d'adhérence entre lesdites extensions (37c, 38c) desdits éléments formant bagues (37, 38) et lesdites parties des flancs associés, pour ainsi assurer l'absence de toutes discontinuités mécaniques dans les parties des flancs sujettes à une flexion pendant un fonctionnement du pneumatique.

3. Bandage pneumatique sans chambre à air selon la revendication 1 ou la revendication 2, caractérisé en ce que, quand le pneumatique est monté avec ses bourrelets (29, 30) confinés entre lesdits talons (37b, 38b) de retenue de bourrelet et qu'il est à un état gonflé et non chargé, le rapport de hauteur θ=h/R et le rapport d'aspect λ=h/g du pneumatique sont sensiblement conformes à la relation

$$\lambda = \frac{0,236}{\theta}$$

où $0,32 < \theta < 0,39$, R est la dimension radiale du pneumatique à partir de son axe jusqu'à une première ligne parallele à l'axe et tangente à la surface externe de la bande de roulement au sommet de la région de couronne, h est la dimension radiale du pneumatique à partir d'une seconde ligne parallèle à l'axe et constituant le diamètre de l'ambout du pneumatique à ladite première ligne et g est la distance, dans une direction parallèle à l'axe, entre les parties les plus largement séparées des deux flancs.

4. Pneumatique sans chambre à air selon la revendication 3, caractérisé en ce que, quand le pneumatique est monté avec ses bourrelets (29, 30) confinés entre lesdits talons de retenue de bourrelet (37b, 38b) et avec ses parties inférieures de flanc contigués auxdits bourrelets (29, 30) supportées par des extensions latérales respectives (37c, 38c) dedits talons (37b, 38b) de retenue de bourrelet et lorsque le pneumatique est un état gonflé et déchargé, le rapport de largeur des bagues

$$v = j/g = 1 - \frac{\lambda}{4}$$

où j est la distance, dans une direction parallèle à l'axe du pneumatique entre les extrémités externes desdites extensions.

5. Bandage pneumatique sans chambre à air selon l'une quelconque des revendications 1 à 4, caractérisé en ce que la surface externe de la partie (27a, 28a) de chacun desdits flancs (27, 28) qui se trouve juste radialement vers l'extérieur de et qui contigüe au bourrelet respectif (29, 30) dans ladite zone d'adhérence et ladite extension (37c, 38c) de l'élément formant bague associé où adhère la partie de surface de flanc sont inclinées à un angle d'environ 25° par rapport à l'axe du pneumatique.

6. Bandage pneumatique sans chambre à air selon l'une quelconque des revendications 1 à 5, caractérisé en ce que la surface de pied (29a, 30a) de chaque bourrelet (29, 30) de sa base jusqu'à son talon dans ladite zone d'adhérence et la partie de siège de bourrelet (37a, 38a) de l'élément formant bague associé où adhére cette surface de pied de bourrelet s'effilent radialement vers l'intérieur du pneumatique à un angle d'environ 5° par rapport à l'axe du pneumatique.

7. Bandage pneumatique sans chambre à air selon l'une quelconque des revendications 1 à 6, caractérisé en ce que le renforcement intérieur de chaque bourrelet (29, 30) est un seul élément en métal (31, 32) sous la forme d'une seule boucle ayant une surface radialement interne (31a, 32a) et radialement externe (31b et 31c, 32b et 32c) et pas d'extrémité libre, ladite surface radialement interne dudit élément de métal en section transversale étant arquée de manière convexe vers le centre de la boucle.

8. Bandage pneumatique sans chambre à air selon l'une quelconque des revendications 1 à 7, caractérisé en ce qu'une bande de sommet (35, 36) est incorporés dans la partie de chaque flanc qui se trouve juste radialement vers l'extérieur de et est contigué au bourrelet respectif (29, 30), chaque bande de sommet s'étendant de son renforcement intérieur associé du bourrelet de se terminant su delà de ladite zone d'adhérence mais radialement vers l'intérieur de la partie la plus large de la section du pneumatique.

9. Bandage pneumatique sans chambre à air selon la revendication 8, caractérisé en ce que le région extrême radialement la plus vers l'intérieur de chaque bande de sommet (35, 36) est placée sur et conjuguée audit renforcement intérieur associé (31, 32).

10. Bandage pneumatique sans chambre à air selon la revendication 8 ou la revendication 9, caractérisé en ce que chaque bande de sommet (35, 36) se termine à une ligne parallèle à l'axe du pneumatique et qui se trouve dans la région autre 1/4 et 1/3 de la hauteur (h) de la section du pneumatique en mesurant à partir d'une ligne qui est parallèle à l'axe du pneumatique et constitue le diamètre de l'ambout du pneumatique jusqu'à une ligne qui est parallèle à l'axe du pneumatique et qui est tangents à la surface externe de la bande de roulement au sommet de la région de couronne.

11. Bandage pneumatique sans chambre à air selon l'une quelconque des revendications 1 à 10, caractérisé en ce que le plus extérieur (38) desdits éléments formant bagues est pourvu d'un renfoncement (55) dont le fond est dirigé vers l'extérieur du pneumatique et qui se trouve entre ladite zone d'adhérence et la partie de cet élément formant bague où il rejoint le tambour porté par l'essieu du véhicule lors de sa fixation, ledit élément formant bague (39) vers l'extérieur étant de plus pourvu d'un petit trou (56) au fond dudit renfoncement (55) et ledit renfoncement étant adapté à contenir ou contenant une quantité d'un agent d'étanchéité (57) ayant des propriétés d'auto-obturation, le renfoncement (55) et l'agent d'étanchéité (57), lorsque celui-ci y est contenu constituant ainsi un système de valve pour le pneumatique permettant le gonflage du pneumatique par insertion d'une aiguille creuse de gonflage à travers ledit trou (56) et ladite quantité de l'agent d'étanchéité (57).

12. Système de montage de pneumatique (22, 25, 37, 38) à utiliser avec un bandage pneumatique (21) sans chambre à air selon l'une quelconque des revendications 1 à 11, le système de montage comprenant un tambour (22) ayant un corps (22a) de tambour adapté à être fixé au moyeu (23) d'un essieu (24) de véhicule et une jupe périphérique (22b) fixée audit corps de tambour et s'en étendant dans la direction vers l'intérieur du véhicule lorsque ls tambour est bien monté sur le moyeu de l'essieu du véhicule ledit système comprenant de plus des éléments formant bagues (37, 38) chacun définissant un siège respectif de bourrelet (37a, 38a), un talon associé de retenue de bourrelet (37b, 38b) et une extension associée de support de flanc (37c, 38c) de ce dernier, lesdits éléments formant bagues (37, 38) étant adaptés à adhérer au pneumatique aux côtés vers l'intérieur et vers l'extérieur du pneumatique respectivement, la zone d'adhérence dans chaque cas s'étendant sur la surface du pied du bourrelet respectif, ledit élément formant bague (38) vers l'extérieur étant contourné pour disposer le siège de bourrelet (38a) vers l'extérieur, le talon (38b) de retenue du bourrelet et l'extension (38c) de support du flanc définie par ledit élément formant bague vers l'extérieur en des emplacements relativement à l'axe du pneumatique correspondant aux emplacements du siège de bourrelet (37a) vers l'intérieur, du talon (37b) de retenue de bourrelet et de l'extension (37c) de support du flanc définis par ledit élément formant bague (37) vers l'intérieur, caractérisé en ce que ladite jupe (22b) est pourvue à sa limite latérale vers l'intérieur, d'une section circonférentielle de talon (25) et est exempte d'une section de talon à sa limite latérale vers l'extérieur, en ce que ledit élément formant bague (37) vers l'intérieur a des contours correspondant sensiblement à ceux de ladite section de talon (25) de ladite jupe (22b) et en ce que sont prévus des premièrs moyens de fixation (40 à 43) pour la fixation amovible de l'élément formant bague (37) vers l'intérieur à ladite jupe (22b) le long de ladite section de talon (25) et des seconds moyens de fixation (50 à 52) pour la fixation amovible de l'élément formant bague (38) vers l'extérieur audit corps de tambour (22a) à proximité de la limite latérale vers l'extérieur de ladite jupe (22b).

13. Système selon la revendication 12, caractérisé en ce que, dans le système de montage, lesdits premiers moyens de fixation comprenant une partie circonférentielle latéralement la plus vers l'extérieur (37d) dudit élément formant bague (37) vers l'intérieur qui est contigué à ladite extension (37c) vers l'intérieur de support du flanc et ayant un certain nombre d'ouvertures (40), une partie circonférentielle latéralement la plus vers l'extérieur (25d) de ladite section de talon (25) de ladite jupe (22b) étant très précisément en dessous de ladite partie latéralement la plus vers l'extérieur (37d) dudit élément formant bague (37) vers l'intérieur et ayant un certain nombre d'ouvertures (41), chacune correspondant à une ouverture respective (40) dans ladite partie latéralement la plus vers l'extérieur (37a) dudit élément formant bague (37) vers l'intérieur et un certain nombre d'éléments de fixation (42, 43) traversant les ouvertures associées respectives (40, 41) dans lesdites parties latéralement vers l'extérieur desdits éléments formant bagues vers l'intérieur et de ladite section de talon de ladite jupe pour les maintenir très solidement l'un à l'autre.

14. Système selon la revendication 12 ou la revendication 13, caractérisé en ce que dans ledit système de montage, ledit second moyen de fixation (50 à 52) comprend une partie circonférentielle radialement vers l'extérieur (45) dudit corps (22a) dudit tambour (22) ayant un certain nombre d'ouvertures (47), une partie circonférentielle latéralement vers l'intérieur (44) dudit élément formant bague (38) vers l'extérieur recouvrant très précisément ladite partie radialement vers l'extérieur (45) dudit corps de tambour (22a) et ayant un certain nombre d'ouvertures (46), chacune correspondant à l'une des ouvertures (47) de ladite partie radialement vers l'extérieur (45) dudit corps de tambour (22a) et un certain nombre d'éléments de fixation (52) traversant des ouvertures respectives associées (46, 47) dans ladite partie latéralement vers l'intérieur (44) dudit élément formant bague (38) vers l'extérieur et ladite partie radialement vers l'extérieur (45) dudit corps de tambour (22a) et les maintenant très solidement.

15. Système selon la revendication 14, caractérisé en ce que, dans le système de montage, ledit corps de tambour (22a) a un certain nombre de pièces circonférentiellement espacées (48) de démontage, chacune étant placée radialement vers l'intérieur de ladite partie radialement le plus vers l'extérieur (45) dudit corps de tambour (22a) et étant recourbée vers le haut pour se trouver au-dessus de l'une desdites ouvertures (47) dans la partie dudit corps de tambour (22a) à un espace suffisant pour recevoir ladite partie latéralement la plus vers l'intérieur (44) duidit élément formant bague vers l'extérieur (38), chacune desdites pièces de démontage (48) contenant une ouverture respective (49), ladite partie latéralement la plus vers l'intérieur (44) dudit élément formant bague vers l'extérieur (39) comprenant un certain nombre de pièces en protubérance (44), chacune étant reçue dans l'une des espaces entre lesdites pièces de démontage (48) de ladite partie radialement la plus vers l'extérieur (45) dudit corps de tambour (22a) et chacun desdits éléments de fixation (52) traversant un groupe associé desdites ouvertures (49, 47, 46) dans lesdites pièces de démontage, lesdites pièces en protubérance et ladite partie radialement la plus vers l'extérieur dudit corps de tambour.

16. Système selon la revendication 15, caractérisé en ce que, dans le système de montage, les espaces circonférentiels définis entre des pièces recourbées de démontage adjacentes (48) dudit corps de tambour sont un peu plus grands que les largeurs circonférentielles des pièces en protubérance (44) de ladite partie latéralement la plus vers l'intérieur dudit élément formant bague (38) vers l'extérieur pour ainsi permettre auxdites pièces en protubérance (44) d'être fixées dans lesdits espaces circonférentiels puis introduites dans les espaces entre ladite partie radialement vers l'extérieur dudit corps de tambour et lesdites pièces de démontage de ce dernier par un déplacement en rotation dudit pneumatique relativement audit tambour.

17. Système selon l'une quelconque des revendications 12 à 16, caractérisé en ce que dans le système de montage, ladite jupe (22b) s'effile radialement vers l'intérieur à un angle d'environ 3° par rapport à l'axe du pneumatique, à partir de la section de talon (25) vers l'intérieur jusqu'à la limite latérale vers l'extérieur de ladite jupe où elle est adjacente au corps (22a) du tambour (22).

18. Combinaison d'un bandage pneumatique sans chambre à air (21) selon l'une quelconque des revendications 1 à 11, avec un système de montage (22, 25, 37, 38) selon l'une quelconque des revendications 12 à 17, où des quantités respectives d'un agent d'étanchéité (53, 54) ayant des propriétés d'auto-obturation sont placées aux régions circonférentielles de jonction entre lesdits éléments formant bagues (37, 38) et ladite jupe (22b) pour rendre l'intérieur du pneumatique (21) étanche à l'air.

Fig. 1.

Fig.2.

Fig.8.

Fig.9.

Fig.3.

0 125 047

Fig.4.

Fig.5.

Fig. 6.

Fig. 7.

Fig. 10.

Fig. 11.

Fig. 12.